# EUROPÄISCHE PATENTSCHRIFT

(11) **EP 0 639 166 B1**
(45) Veröffentlichungstag und Bekanntmachung des Hinweises auf die Patenterteilung: **13.08.1997**
(21) Anmeldenummer: 93909934.7
(22) Anmeldetag: 10.05.1993
(51) Int. Cl.: C05F 17/02, C12M 1/04

(54) **KOMPOSTIERUNGSANLAGE MIT EINEM BELÜFTUNGSSYSTEM FÜR GESCHLOSSENE ROTTEANLAGEN**
COMPOSTING DEVICE WITH A VENTILATION SYSTEM FOR CLOSED ROTTING DEVICES
DISPOSITIF DE COMPOSTAGE POURVU D'UN SYSTEME D'AERATION DE DISPOSITIFS FERMES DE POURRISSEMENT

(30) Priorität: 09.05.1992 DE 4215269
(43) Veröffentlichungstag der Anmeldung: 22.02.1995
(73) Patentinhaber: Grabbe, Klaus, Dr., D-38116 Braunschweig (DE)
(72) Erfinder: GRABBE, Klaus, D-3300 Braunschweig (DE); SCHAAR, Lothar, D-3061 Heuerssen (DE); DEUTSCH, Andreas, D-3320 Salzgitter (DE)
(74) Vertreter: von Samson-Himmelstjerna, Friedrich R., Dipl.-Phys.
(86) Internationale Anmeldenummer: EP9301142
(87) Internationale Veröffentlichungsnummer: WO9323350

(56) Entgegenhaltungen:
- EP-A- 0 107 925
- EP-A- 0 296 645
- EP-A- 0 413 992
- FR-A- 699 030

## Beschreibung

Die Erfindung bezieht sich auf eine Kompostierungsanlage mit einem Belüftungssystem für geschlossene Rotteanlagen für die Kompostierung biogener organischer Reststoffe, die eine variable Gestaltung der Strömungsparameter und -führungen erlaubt, um hierdurch das Klima und die Milieuzustände in der Miete bzw. in der Rotte auf die Bedürfnisse des mikrobiellen Stoffumsatzes während des Kompostierungsprozesses zuzuschneiden.

Bei der Rotte biogener organischer Stoffgemenge unter aeroben Bedingungen entstehen Wärme und Stoffwechselgase, die über Belüftungssysteme abgeführt werden müssen. Stand der Technik ist, daß Rottegemenge von Frischluft durchströmt werden und die korrespondierende Abluft ausgeblasen wird. Diese Methode gestattet es nicht, auf die Rottevorgänge definiert Einfluß zu nehmen, da mit der Frischluftzufuhr unkontrolliert Sauerstoff zugeführt und mit der Abluft Feuchtigkeit und Wärme ausgetragen werden. Es bilden sich Gas-, Feuchtigkeits- und/oder Temperatur-Gradienten aus, die aufgrund der vernetzten Parameter nur zur Beschreibung des Prozesses taugen.

Konventionelle Belüftungssysteme haben den Nachteil, daß wichtige Verfahrensziele nicht erreicht werden. So ist ein Wasseraustrag erwünscht, doch wird damit gleichzeitig auch Wärme unkontrolliert abgeführt, so daß einerseits erwünschte Feuchtegehalte nicht eingehalten und andererseits wichtige Temperaturvorgaben für die Entwicklung mesophiler und thermophiler Mikrofloren nicht angesteuert werden können. Auch muß darauf verzichtet werden, über einen definierten Sauerstoffeintrag Einfluß auf den mikrobiellen Stoffumsatz zu nehmen. Die Mängel der derzeitigen Prozeßführungen zeigen sich an der Ausbildung zu hoher Temperaturplateaus, an der fortschreitenden Trockerstabilisierung des Rottegutes und an einem unbefriedigenden Stoffumsatz. Hinzu kommen der Austrag von Geruchsstoffen und der Kondensatanfall die zusätzliche Behandlungseinrichtungen erforderlich machen. Daraus leiten sich bekannte Nachteile für das Produkt Kompost ab, nämlich die unbefriedigende Ausnutzung der Leistungspotentiale spezieller Mikrofloren, die zwangsläufig sich ergebende schlechte Reproduzierbarkeit angestrebter Qualitäten im Sinne der Güterichtlinien für Komposte und bedenkliche Nischenbildungen für Schadfloren in Komposten und seinen Folgeprodukten. Das Risiko möglicher Schadwirkungen bei der diversifizierten Verwendung ist nicht kalkulierbar und vor dem Hintergrund der Produkthaftpflicht unzumutbar.

Die eingangs genannte Kompostierungsanlage ist aus der DE-40 34 400 A1 bzw. der korrespondierenden WO 92 07807 - **GRABBE** - bekannt. Auf dieses Dokument wird hiermit - zur Vermeidung von Wiederholungen - ausdrücklich Bezug genommen. Es beschreibt ein Verfahren zur biotechnologischen Behandlung eines Reststoffgemenges, vorzugsweise in Form einer Miete, durch einen mikrobiellen Umsetzungsprozeß in einem geschlossenen System, das insbesondere zur Herstellung von Kompost geeignet ist. Hierbei werden physikalische, chemische und biologische Verfahrensparameter in die Verfahrensführung einbezogen und miteinander im Sinne einer Optimierung der Hygienisierung, Geruchstilgung und Dauerhumusbildung des Reststoffgemenges auf den jeweils dazu erforderlichen mikrobiellen Stoffumsatz zugeschnitten. Hierzu wird das Reststoffgemenge zwei unterschiedlichen Belüftungsarten oder einer Mischform zwischen diesen beiden Belüftungsarten unterworfen. Nach der einen Belüftungsart wird Luft durch das Reststoffgemenge hindurchgeführt, nach der zweiten Belüftungsart hingegen die Luft oberhalb des Reststoffgemenges entlanggeführt. Die beiden Belüftungsarten werden zum Aufbau gewünschter Temperatur-, Feuchtigkeits- und/oder Sauerstoff-Kohlendioxidverhältnisse, insbesondere Profile, im Reststoffgememge so aneinander angepaßt, daß variable Mischungsverhältnisse zwischen 0 bis 100 % aus dem Umluftvolumenstrom gebildet werden können. Die Mittel zur Belüftung sind jeweils Lüfter bzw. Ventilatoren, wobei der eine Lüfter die Luft oberhalb des Reststoffgemenges entlangführt und ein zweiter Lüfter die Luft durch das Reststoffgemenge hindurchbläst.

Das in den vorgenannten Druckschriften beschriebene Verfahren arbeitet in der Regel mit Erfolg. Probleme können jedoch dann auftreten, wenn die Dichte des Rottegemenges eine Durchströmung behindert. Im Grenzfall einer Luftundurchlässigkeit des Rottegemenges baut der für die Durchströmung vorgesehene Ventilator lediglich einen statischen Druck unter der Miete auf, ohne daß Luft zum Strömen gebracht werden kann, selbst dann nicht, wenn beide Ventilatoren laufen, d.h. der für die Überströmung der Miete vorgesehene Ventilator insoweit den für die Durchströmung der Miete vorgesehene Ventilator unterstützt, als die über die Miete entlangstreichende Luft eine gewisse Sogwirkung auf die Miete ausübt. Obwohl beide Ventilatoren laufen, bewirkt nur das Überströmen der Miete eine gewisse Luftzirkulation im System.

Die DE-40 21 868 A1 - **HERHOF** - beschreibt ein Verfahren zur Kompostierung von Abfällen. Dabei wird das Rottegut in einen geschlossenen Behälter eingebracht und unter Luftzuführung mikrobiell abgebaut. Um die Kompostierung während der Anfahrphase schnell und zuverlässig in Gang bringen zu können, wird während der Anfahrphase die aus dem Rottegut austretende Abluft dem Rottegut erneut zugeführt. Diese Umluftphase wird aufgegeben, wenn der Sauerstoffanteil 18 % unterschreitet. Das Umluftsystem dient der Konservierung der biogenen Wärmebildung, vor allem im Winter.

Die DE-40 21 865 A1 - **HERHOF** - beschreibt ebenfalls ein Verfahren und eine Vorrichtung zur Kompostierung von Abfällen mit Umluftführung, die der Hygienisierung über eine Zeit von 5 Tagen dient. Dabei wird die Umluftführung nach dem Abbau der leichter abbaubaren Bestandteile gestartet. Dies hat seinen Grund in der Tatsache, daß sich mit dem dargestellten System die biogene Wärmebildung in der stürmischen Anfangsphase der Stoffbehandlung nicht beherrschen läßt, wenn das beschriebene Regelungssystem zur den Gashaushalt benutzt wird. Zur Kühlung bleibt nur die Frischluftzufuhr als Teil einer undefinierten Parameterverknüpfung.

Schließlich beschreibt die DE-40 08 104 A1 - **WIENECKE** - ein Kompostierungssystem, das sich nur für Kleinbehälter eignet, da zur Lüftung lediglich die Konvektion eingesetzt wird. Eine Ansteuerung des mikrobiellen Stoffumsatzes ist nicht möglich.

Die Erfindung zielt darauf ab, die Nachteile des genannten Standes der Technik zumindest teilweise zu überwinden.

Sie erreicht dieses Ziel durch den Gegenstand des Patentanspruches 1, also durch eine Kompostierungsanlage mit einem Belüftungssystem für geschlossene Rotteanlagen und mit ersten Mitteln (V1, V2, R1, R2, R3, R4, R5, R6, R7) die derart ausgelegt und angeordnet sind, daß mit ihnen stets eine oder mehrere beliebige Strömungsart(en) aus der folgenden Strömungsarten-Gruppe: Überströmen, Durchströmen und Umströmen einer ruhenden oder durchmischten Gemengemiete (10) mit konditionierter Umluft wahlweise einstellbar ist (sind).

Hierdurch ist ein äußerst flexibles Steuerungssystem zur Verfügung gestellt, mit dessen Hilfe die sehr unterschiedliche biologische Aktivität von Reststoffgemengen kontrollierbar wird. Definierte Milieuzustände im Rottegut lassen sich über das Umluftsystem erzeugen, das ein vorgegebenes Klima auf das festere Stoffgemenge überträgt. Erfindungsgemäß geschieht dies durch Änderung der Strömungsparameter und -führung, nämlich wahlweises Überströmen und/oder Durchströmen und/oder Umströmen der Miete.

Die erfindungsgemäße Kompostieranlage erlaubt die Gemengemiete wahlweise verschiedenen Strömungsvarianten auszusetzen, beispielsweise einer Strömungsvariante, bei der lediglich eine Überströmung der Miete stattfindet, eine gleichzeitige Durch- und Umströmung der Miete also unterbunden wird. Nach einer anderen Variante kann lediglich eine Durchströmung eingestellt werden, d.h. eine Über- und Umströmung unterbunden werden. Schließlich erlaubt die erfindungsgemäße Kompostieranmage nur eine Umströmung einzustellen, eine gleichzeitige Über- und Durchströmung also zu unterbinden. Selbsverständlich können einige oder alle drei dieser Strömungsvarianten gleichzeitig eingesetzt werden.

Bevorzugt weisen die ersten Mittel zur wahlweisen Einstellung der Strömungsvarianten Ventile zur definierten Einstellung der Luftführungswege auf. Dabei sind die Ventile bevorzugt als steuerbare Regelventile ausgestaltet.

Weiterhin weisen die ersten Mittel zur wahlweisen Einstellung der Strömungsvarianten wenigstens zwei Ventilatoren auf, die ebenfalls zur definierten Einstellung der Strömungsparameter ansteuerbar sind und wahlweise parallel oder in Serie geschaltet werden können.

Nach einer weiteren bevorzugten Ausführungsvariante ist ein zusätzlicher Ventilator vorgesehen, der seriell den beiden vorgenannten Ventilatoren nachgeschaltet ist, und zwar in Strömungsrichtung hinter der Miete.

Bevorzugt sind alle Ventilatoren hinsichtlich ihrer Leistungscharakteristik steuerbar.

Nach einer weiteren Ausführungsform weist das Umluftsystem zweite Mittel zur manuellen oder automatischen Zufuhr variabler Frischluftmengen auf. Bevorzugt sind dritte Mittel zur passiven oder ventilatorunterstützten Ausblasen einer zur zugeführten Frischluftmenge korrespondierenden Abluftmenge vorgesehen. Vierte Mittel dienen bevorzugt zur zentralen und/oder partiellen Temperierung und Befeuchtung der Umluft. Fünfte Mittel Schließlich dienen bevorzugt zur Steuerung der Gaszusammensetzung in der Umluft.

Durch eine manuelle oder programmierte Vorgabe und/oder rechnergestützte Veränderung variabler Strömungsführungen und -parameter gelingt es, unerwünschte Wärmebildungen und -staus zu unterdrücken bzw. Überschußwärme aus dem System zu entfernen, ohne daß andere prozeßrelevante Parameter nachhaltig geändert werden. Die Prozeßparameter können also unabhängig voneinander beeinflußt werden. Daraus erwachsen Vorteile, die sich wie folgt beschreiben lassen:

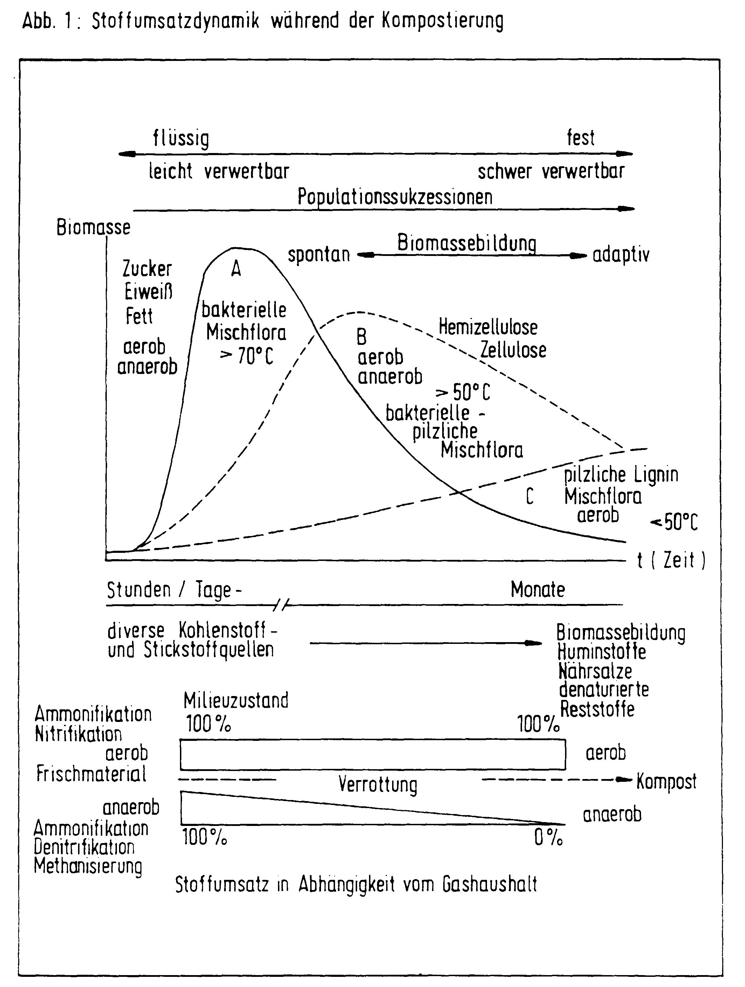

Die Temperaturplateaus für allgemeine und spezielle Stoffwechselleistungen der am Kompostierungsprozeß beteiligten Mikrofloren lassen sich gezielt ansteuern (vgl. Abb. 1, A, B, C). Die Hygienisierung läßt sich thermisch und biochemisch bei Temperaturen < 60°C optimal erreichen. Geruchsstoffe werden immer wieder durch das Rottegut rezykliert und dabei abgebaut. Der Stoffumsatz wird über vorgegebene Temperaturprofile so optimiert, daß kürzere Verweilzeiten den Betrieb geschlossener Rotteanlagen wirtschaftlicher gestalten. Die Zufuhr des Sauerstoffs kann so geregelt werden, daß zwischen strikter Anaerobie und strikter Aerobie alle Zustände über die Gasphase im Umluftsystem dargestellt werden können.

Nachstehend wird die Erfindung anhand von Ausführungsbeispielen und der beigefügten, stark schematisierten Zeichnungen näher erläutert.

In den Zeichnungen zeigen:
- Abb. 1: die Stoffumsatzdynamik während der Kompostierung;
- Abb. 2: Strömungsvarianten;
- Abb. 3: ein Steuerschema eines variablen Umluftsystems.

Abb. 1 zeigt die Biomassebildung und den Stoffumsatz in Abhängigkeit von der Zeit und der jeweiligen Mikroflora als dynamischen Prozeß während der Kompostierung.

Die Erfindung stellt nun darauf ab, der jeweils gewünschten Mikroflora einen Selektionsvorteil dadurch zu gewähren, daß die für diese Flora optimalen Parameter, wie Temperatur, Feuchtigkeit, Gaszusammensetzung zur Verfügung gestellt werden.

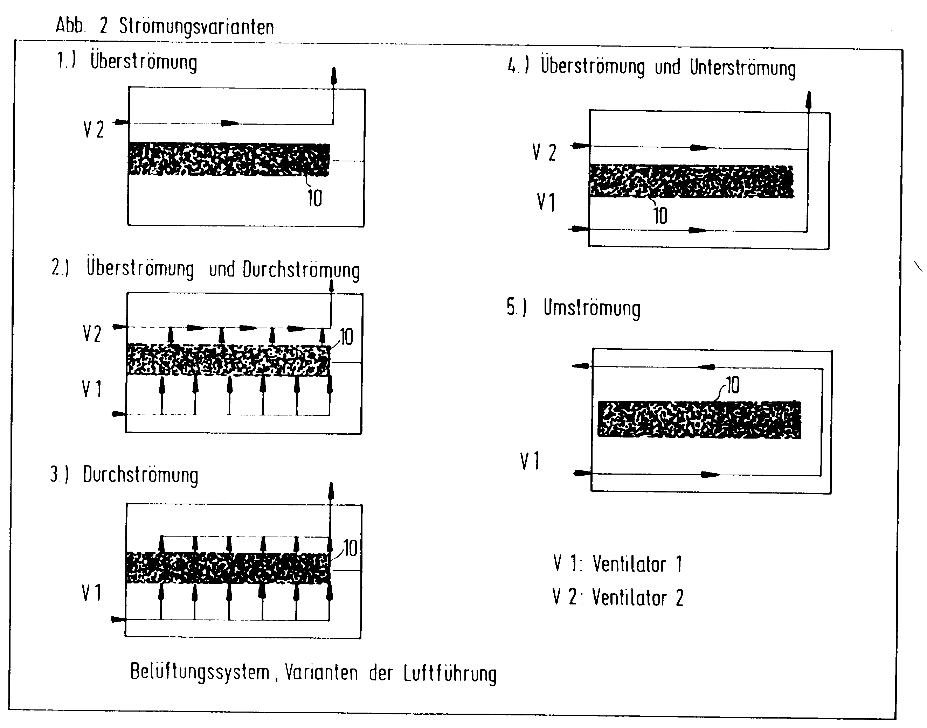

Abb. 2 stellt die verschiedenen Lüftungsvarianten dar, nämlich:

### Überströmung (Abb. 2 - Ziff. 1.))

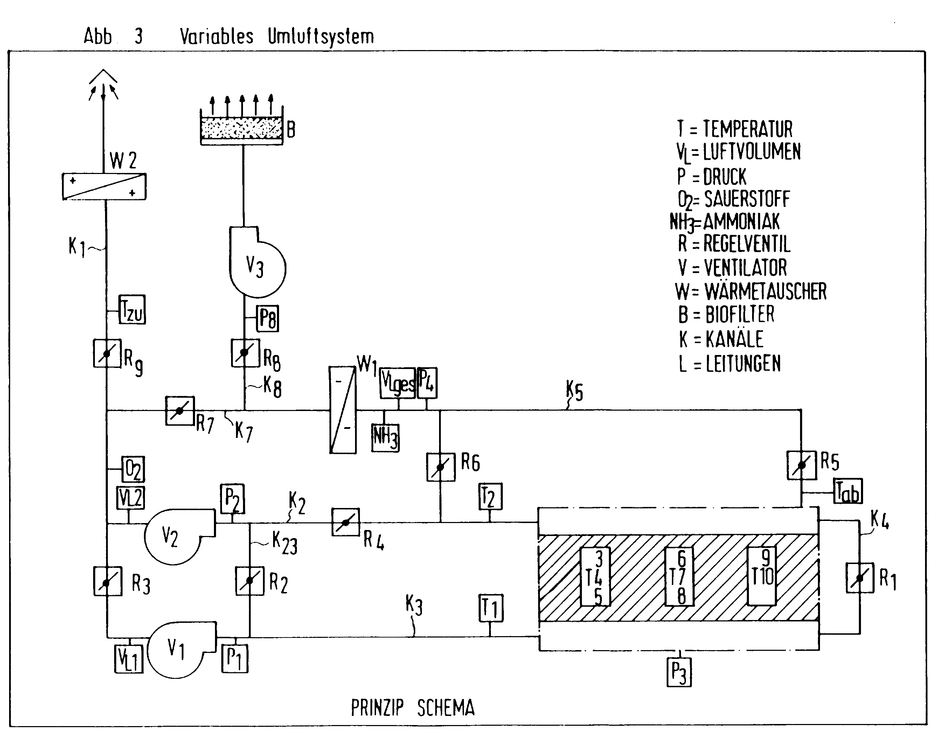

Zum Zwecke der Überströmung wird die Luft über die Miete 10 geführt. In diesem Fall läuft nur ein Ventilator, nämlich der Ventilator V2 (siehe auch Abb. 3). Die Regelventile R1, R2, R3 und R6 (siehe Abb. 3) sind dabei geschlossen; die Regelventile R4, R5 und R7 hingegen geöffnet. Die Regelventile R8 und R9 werden in Abhängigkeit vom Frischluftbedarf angesteuert. Bei Überströmung streicht die Luft lediglich über die freie Oberfläche der Miete 10. Diese Variante führt sehr sanft Wärme und Abgase ab. Sie führt außerdem zu einem leichten Ansaugen der Gase aus der Miete 10 in die überströmende Luft.

### Überströmung und Durchströmung (Abb. 2 - Ziff. 2.))

Um die Überströmung mit einer Durchströmung zu kombinieren, werden ein weiterer Ventilator, nämlich der Ventilator V1, zugeschaltet und das Regelventil R3 geöffnet (vgl. Abb. 3). Alle anderen Ventilstellungen bleiben davon unberührt. Die Vorteile dieser Strömungsvariante sind ausführlich in der DE 40 34 400 A1 bzw. der hierzu korrespondierenden WO92/07807 - **GRABBE** - beschrieben. Zur Vermeidung von Wiederholungen wird ausdrücklich auf den Inhalt des genannten Dokumentes verwiesen.

### Durchströmung (Abb. 2 - Ziff. 3.))

Im Falle der Durchströmung wird der Ventilator 2 abgeschaltet und das Regelventil R4 geschlossen. Alle anderen Ventilstellungen bleiben davon unberührt (Abb. 3). Zur Verstärkung kann jedoch der (beispielsweise schwächer ausgelegte) Ventilator V2 seriell zugeschaltet und das Regelventil R2 geöffnet werden.

### Überströmung und Unterströmung (Abb. 2 - Ziff 4.))

Bei der Überströmung und Unterströmung arbeiten beide Ventilatoren V1 + V2 wieder parallel, die Regelventile R3, R4 und R1 sind geöffnet; das Regelventil R2 geschlossen. Die Stellung der anderen Regelventile bleibt unverändert (Abb. 3). Bei dieser Strömungsvariante wird die Miete 10 beidseitig (oben und unten) dem gleichen Effekt ausgesetzt wie bei der Variante gemäß Ziff. 1.), d.h. der reinen, nur einseitig wirkenden Überströmung.

### Umströmung (Abb. 2 - Ziff. 5.))

Im Falle der Umströmung läuft nur der Ventilator V1 und die Regelventile R1, R6, R7 und R3 sind geöffnet; die Regelventile R2, R4 und R5 sind hingegen geschlossen (Abb. 3).

Bei Bedarf kann das Regelventil R2 geöffnet werden und dient dann der Addition geförderter Luftmengen bei den verschiedenen Luftführungsvarianten.

Abb. 3 zeigt das Flußschema eines Ausführungsbeispiels der Erfindung. Danach kann Umluft bei geöffnetem Regelventil R5 über einen Wärmetauscher W1 geführt werden. Die Wärmegewinnung im Wärmetauscher W1 wird bevorzugt dazu verwendet, über einen Wärmetauscher W2 Frischluft zu temperieren, die über einen Kanal K1 einströmt. Der zum Frischlufteintrag über ein Regelventil R9 korrespondierende Luftaustrag wird bei geöffnetem Regelventil R8 über einen in Reihe mit den beiden Ventilatoren V1 und V2 geschalteten Ventilazor V3 vorgenommen. Die ausgeblasene Luft wird hierbei über einen Biofilter B geführt. Im Kanal K1 ist hinter dem Wärmetauscher W2 ein Temperaturfühler T_{zu} zugeordnet, welcher die Temperatur der zugeführten Luft mißt. Seine Ausgangsdaten werden einem (nicht gezeigten) Prozeßrechner zur elektronischen Steuerung des Kompostierungsprozesses zugeführt.

Unterhalb des Regelventiles R9 ist im Kanal K1 ein Fühler O₂ zur Ermittlung des O₂ Gehaltes angeordnet. Auch dessen Ausgangswerte werden dem Prozeßrechner zugeführt. Der Kanal K1 verzweigt sich in einen Kanal K2, in welchem der Ventilator V2 angeordnet ist. Vor dem Ventilator V2 ist ein Fühler VL2 angeordnet, welcher das Luftvolumen mißt. Dessen Ausgangswert wird wiederum dem Prozeßrechner zugeführt. Dem Ventilator V2 ist ein weiterer Fühler P2 nachgeschaltet, welcher den Strömungsdruck mißt. Der Kanal K2 mündet in den Raum oberhalb der Miete 10. Er enthält, dem Ventilator V2 nachgeschaltet, ein Regelventil R4, das durch den Prozeßrechner ansteuerbar ist. Auch der Ventilator V2 ist durch den Prozeßrechner ansteuerbar. Unmittelbar vor der Mündung des Kanales K2 in den Raum oberhalb der Miete 10 ist ein weiterer Temperaturfühler T2 angeordnet, dessen Ausgangssignal wiederum dem Prozeßrechner zugeführt wird.

Der Raum oberhalb der Miete 10 mündet in den Kanal K5, der mit einem Temperaturfühler Tab bestückt ist. Dessen Meßwerte werden wiederum dem Prozeßrechner zugeführt. Der freie Strömungsquerschnitt des Kanales K5 wird durch das Regelventil R5 gesteuert. Der Kanal K5 wird schließlich über den Wärmetauscher W1 einem Verzweigungspunkt zugeführt, von welchem die Kanäle K7 und K8 abgehen. Der Kanal K7 ist über ein vom Prozeßrechner ansteuerbares Regelventil R7 in den Kanal 1 rückgeführt. Der freie Strömungsquerschnitt des Kanales K8 wird durch ein weiteres Regelventil R8 eingestellt. Dem Regelventil nachgeschaltet ist ein Druckfühler P8, dem der Ventilator V3 nachgeschaltet ist. Der Ventilator V3 bläst die Abluft über den Biofilter B ins Freie.

Dem Wärmetauscher W1 unmittelbar vorgeschaltet sind ein weiterer Druckfühler P4, ein Luftmengenfühler VL_{ges} und ein NH₃-Fühler. Die Ausgangswerte dieser Fühler werden ebenfalls dem Prozeßrechner zugeführt.

Vor den letztgenannten Fühlern zweigt vom Kanal K5 ein Kanal K6 ab, der über ein Regelventil R6 mit dem bereits genannten Kanal K2 verbunden ist.

Der Kanal K1 ist über seine zum Ventilator 2 führende Verzweigungsleitung hinaus weitergeführt, nämlich zum Ventilator V1. Zwischen den Ventilatoren V2 und V1 befindet sich im Kanal K1 ein - wiederum vom Prozeßrechner steuerbares - Regelventil R3. Unmittelbar vor dem Ventilator V1 mißt ein Luftvolumenfühler VL1 das zum Ventilator V1 strömende Luftvolumen. Der Ventilator V1 bläst Luft über den Kanal K3 in einen Raum unterhalb der Miete 10. Dem Ventilator V1 ist wiederum ein Druckfühler P1 nachgeschaltet, und zwar vor einer Verzweigungsleitung K23, welche den Kanal K2 mit dem Kanal K3 über ein Regelventil R2 verbindet. Unmittelbar vor der Mündung des Kanales K3 in den Raum unterhalb der Miete 10 ist noch ein Temperaturfühler T1 angeordnet.

Ein Druckfühler P3 mißt den Druck im Raum unterhalb der Miete 10. Die Räume unterhalb und oberhalb der Miete 10 sind über einen Kanal K4 miteinander verbunden. Das Regelventil R1 steuert den freien Strömungsquerschnitt im Kanal K4.

Schließlich sind in der Miete noch mehrere Temperaturfühler T3 bis T10 angeordnet.

Das Regelventil R1 ermöglicht im Zusammenspiel mit den anderen Regelventilen die in Abb. 2 dargestellten Strömungsvarianten. Beim dargestellten Ausführungsbeispiel sind die Regelventile prozeßrechnergesteuert und werden die Ausgangsdaten sämtlicher Meßgeräte dem Prozeßrechner zugeführt. Ebenso prozeßrechnergesteuert sind die Leistungen der 3 Ventilatoren V1, V2 und V3.

Das dargestellte Ausführungsbeispiel veranschaulicht die ungemeine Vielfältigkeit der mit ihm erzielbaren Strömungsvarianten mit Hilfe nur zweier Ventilatoren und der genannten Regelventile. Erst die Vielfalt der Strömungsvarianten ermöglicht das genaue und feinfühlige Zuschneiden der Prozeßparameter auf den jeweils gewünschten mikrobiellen Stoffumsatz, d.h. die Anpassung der Prozeßparameter an die jeweils gewünschte Mikroflora. Erst hierdurch kann biologisch wirksam auf den Stoffumsatz eingewirkt werden.

Insgesamt wird ein Umluftführungssystem für geschlossene Rottesysteme dargestellt, bei welchen die Strömungsparameter und die Strömungsführung an die Zwecke einer definierten biochemischen Prozeßführung feinfühlig anpaßbar sind. Durch diese Anpassung kann die Prozeßführung variabel gestaltet werden. Ruhende oder durchmischte Mieten können über-, durch- und umströmt werden. Alle Kombinationen dieser Strömungsvarianten werden möglich. Insgesamt gelingt es, über die Einhaltung gewünschter Klima- und Milieuzustände, den mikrobiellen Stoffumsatz feinfühlig anzusteuern und zu regeln.

Um die Leistung der beiden Ventilatoren V1, V2 kombinieren zu können, ist die Verknüpfung der Unterströmung mit der Überströmung durch den Kanal K4 mit eingebautem Regelventil R1 eine Problemlösung, die erhebliche Vorteile gegenüber dem Stand der Technik besitzt. Sie dient den anhand der Abb. 2 dargestellten Strömungsvarianten.

Demgegenüber beschreibt das eingangs genannte Dokument **GRABBE** eine relativ einfache Kanalausstattung unter Einschränkung der Luftführungsvarianten. Erst die Kanalvernetzung mit den entsprechenden Regelventilen ermöglicht die Vernetzung der Ventilatorleistungen. Auch hier ist das Regelventil R1, das von Hand oder rechnergestützt stufenlos vertrimmbar ist, von großer Bedeutung. Dadurch werden Feinabstimmungen bei der Bioprozeßführung in bisher nicht gekannter Qualität möglich.

## Patentansprüche

1. Kompostierungsanlage mit einem Belüftungssystem für geschlossene Rotteanlagen und mit ersten Mitteln (V1, V2, R1, R2, R3, R4, R5, R6, R7) die derart ausgelegt und angeordnet sind, daß mit ihnen stets eine oder mehrere beliebige Strömungsart(en) aus der folgenden Strömungsarten-Gruppe: Überströmen, Durchströmen und Umströmen einer ruhenden oder durchmischten Gemengemiete (10) mit konditionierter Umluft wahlweise einstellbar ist (sind).

2. Kompostierungsanlage nach Anspruch 1, bei welcher die ersten Mittel (V1, V2, R1 bis R7) Ventile (R1 bis R7) zur definierten Einstellung der Luftführungswege (K1 bis K7, K23) aufweisen.

3. Kompostierungsanlage nach Anspruch 2, bei welcher die Ventile (R1 bis R7) als steuerbare Ventile ausgelegt sind.

4. Kompostierungsanlage nach einem der vorstehenden Ansprüche, bei welcher die ersten Mittel (V1, V2, R1 bis R7) wenigstens zwei hinsichtlich ihrer Leistung einstellbare Ventilatoren (V1, V2) aufweisen.

5. Kompostierungsanlage nach Anspruch 4, bei welcher die Ventilatoren (V1, V2) hinsichtlich ihrer Leistungscharakteristik steuerbar sind.

6. Kompostierungsanlage nach Anspruch 4 oder 5, bei welcher die beiden Ventilatoren (V1, V2) in einer zur Miete (10) führenden Strömungsrichtung parallel geschaltet sind.

7. Kompostierungsanlage nach einem der Ansprüche 4 bis 6, mit einer Umschalteinrichtung (K23, R2, R4) zum Umschalten der beiden Ventilatoren (V1 und V2) von ihrer Parallelschaltung in eine Reihenschaltung, derart, daß die Ausgangsströme der beiden Ventilatoren (V1, V2) in einem einzigen Strömungskanal (K3) überlagert werden.

8. Kompostierungsanlage nach einem der vorstehenden Ansprüche, bei welcher die ersten Mittel (V1, V2, R1-R7) zusätzlich zu den beiden parallel geschalteten Ventilatoren (V1, V2) wenigstens einen weiteren seriell der Miete (10) nachgeschalteten Ventilator (V3) aufweisen.

9. Kompostierungsanlage nach einem der vorstehenden Ansprüche, bei welcher das Umluftsystem zweite Mittel (R9) zur manuellen oder automatischen Zufuhr variabler Frischluftmengen aufweist.

10. Kompostierungsanlage nach Anspruch 9 mit dritten Mitteln (R8, V3) zum passiven oder ventilatorunterstützten Ausblasen einer zur zugeführten Frischluftmenge korrespondierenden Abluftmenge.

11. Kompostierungsanlage nach einem der vorstehenden Ansprüche mit vierten Mitteln (W1, W2) zur zentralen und/oder partiellen Temperierung und Befeuchtung der Umluft.

12. Kompostierungsanlage nach einem der vorstehenden Ansprüche mit fünften Mitteln zur Steuerung der Gaszusammensetzung in der Umluft.

## Claims

1. Composting plant having a ventilation system for closed rotting plants and having first means (V1, V2, R1, R2, R3, R4, R5, R6, R7) which are designed and arranged such that using them, any one or more type(s) of flow can be selectively set from the following group of types of flow: flow over, flow through and flow around a resting or agitated mixture stack (10) using conditioned circulating air.

2. Composting plant according to claim 1, in which the first means (V1, V2, R1 to R7) have valves (R1 to R7) for defined adjustment of the air guiding paths (K1 to K7, K23).

3. Composting plant according to claim 2, in which the valves (R1 to R7) are designed as controllable valves.

4. Composting plant according to one of the preceding claims, in which the first means (V1, V2, R1 to R7) have at least two ventilators (V1, V2) which can be adjusted as regards their efficiency.

5. Composting plant according to claim 4, in which the ventilators (V1, V2) can be controlled with respect to their efficiency characteristics.

6. Composting plant according to claim 4 or 5, in which the two ventilators (V1, V2) are connected in parallel in a flow direction leading to the stack (10).

7. Composting plant according to one of claims 4 to 6, having a switching device (K23, R2, R4) for switching the two ventilators (V1 and V2) from their parallel connection to a series connection, such that the starting flows of the two ventilators (V1, V2) are superimposed in a single flow channel (K3).

8. Composting plant according to one of the preceding claims, in which the first means (V1, V2, R1-R7) have at least one further ventilator (V3) connected downstream in series with the stack (10) in addition to the two ventilators (V1, V2) connected in parallel.

9. Composting plant according to one of the preceding claims, in which the circulating air system has second means (R9) for manual or automatic supply of variable quantities of fresh air.

10. Composting plant according to claim 9, having third means (R8, V3) for passive or ventilator-assisted blowing of a quantity of waste air corresponding to the quantity of fresh air supplied.

11. Composting plant according to one of the preceding claims, having fourth means (W1, W2) for central and/or partial heating and moistening of the circulating air.

12. Composting plant according to one of the preceding claims, having fifth means for controlling the gas composition in the circulating air.

## Revendications

1. Installation de compostage dotée d'un système de ventilation pour des dispositifs fermés de pourrissement et dotée de premiers moyens (V1, V2, R1, R2, R3, R4, R5, R6, R7) qui sont dimensionnés et disposés de façon telle que, grâce à ces moyens, on peut toujours régler, au choix, un ou plusieurs types quelconques de circulation d'air conditionné sélectionnés parmi le groupe suivant de types d'écoulement d'air : écoulement par le haut, écoulement traversant et écoulement circulaire autour d'un silo-meule (10) de mélange statique ou non statique.

2. Installation de compostage selon la revendication 1, dans laquelle les premiers moyens (V1, V2, R1 à R7) sont dotés de vannes (R1 à R7) pour le réglage défini des trajectoires de ventilation (K1 à K7, K23).

3. Installation de compostage selon la revendication 2, dans laquelle les vannes (R1 à R7) sont conçues comme des vannes contrôlables.

4. Installation de compostage selon l'une quelconque des revendications précédentes, dans laquelle les premiers moyens (V1, V2, R1 à R7) sont dotés au moins de deux ventilateurs (V1, V2) réglables en ce qui concerne leurs performances.

5. Installation de compostage selon la revendication 4, dans laquelle les ventilateurs (V1, V2) sont contrôlables concernant leurs caractéristiques de fonctionnement.

6. Installation de compostage selon la revendication 4 ou 5, dans laquelle les deux ventilateurs (V1, V2) sont montés en parallèle, suivant un sens d'écoulement allant jusqu'au silo-meule (10).

7. Installation de compostage selon l'une quelconque des revendications 4 à 6, dotée d'un dispositif de commutation ( K23, R2, R4) pour commuter les deux ventilateurs (V1 et V2), passant de leur montage en parallèle à leur montage en série, de façon telle que les flux de sortie des deux ventilateurs (V1, V2) sont superposés en seul canal d'écoulement (K3).

8. Installation de compostage selon l'une quelconque des revendications précédentes, dans laquelle les premiers moyens (V1, V2, R1 à R7) comprennent, en plus des deux ventilateurs (V1, V2) montés en parallèle, au moins un autre ventilateur (V3) monté en série, en aval du silo-meule (10).

9. Installation de compostage selon l'une quelconque des revendications précédentes, dans laquelle le système de circulation d'air comprend des deuxièmes moyens (R9) pour l'admission manuelle ou automatique de quantités variables d'air frais.

10. Installation de compostage selon la revendication 9, comprenant des troisièmes moyens (R8, V3) évacuant, de façon passive ou à l'aide des ventilateurs, une quantité d'air sortant correspondant à la quantité d'air frais entré.

11. Installation de compostage selon l'une quelconque des revendications précédentes, comprenant des quatrièmes moyens (W1, W2) pour tempérer et humidifier l'air en circulation de façon centrale et/ou partielle.

12. Installation de compostage selon l'une quelconque des revendications précédentes, comprenant des cinquièmes moyens pour contrôler la composition des gaz dans l'air en circulation.
